# EUROPEAN PATENT APPLICATION

(11) **EP 4 502 838 A1**
(43) Date of publication of application: **05.02.2025**
(21) Application number: 23188834.8
(22) Date of filing: 01.08.2023
(51) Int. Cl.: G06F 21/50, G06F 21/70, H04B 1/00, H04L 9/40

(54) **SOFTWARE-DEFINED RADIO FOR AIR TRAFFIC CONTROL, AND SYSTEM**

(71) Applicant: Rohde & Schwarz GmbH & Co. KG, 81671 München (DE)
(72) Inventor: GANSLMEIER, Bernhard, 83024 Rosenheim (DE)
(74) Representative: Isarpatent

(57) **Abstract**

The present invention relates to a software-defined radio (100) for air traffic control. The software-defined radio (100) comprises processing circuitry (110). The software-defined radio (100) further comprises a high frequency, hf, transceiver (120) coupled to the processing circuitry (110). In addition, the software-defined radio (100) comprises at least one network interface (130) coupled to the processing circuitry (110) and configured to establish communication via a communication network. Further, the software-defined radio (100) comprises a software-implemented voice over IP, VoIP, module (140) executable by the processing circuitry (110) and configured to provide VoIP communication via the at least one network interface (130). The software-defined radio (100) further comprises a software-implemented webserver (150) executable by the processing circuitry (110) and configured to provide user access to the software-defined radio (100) via the at least one network interface (130). In addition, the software-defined radio (100) comprises at least one security mechanism (160) configured to protect at least one of the at least one network interface (130), the VoIP module (140), and the webserver (150) from threats and/or cyber-attacks.

## Description

### TECHNICAL FIELD

The present invention relates to a software-defined radio for air traffic control. Further, the invention relates to an air traffic control system comprising such software-defined radio.

### BACKGROUND

A software-defined radio (SDR), i.e. a radio communication apparatus in which components that conventionally have been implemented in analog hardware are instead implemented by software, may also be used for air traffic control (ATC).

In an ATC application scenario, such software-defined radio may be used, for example, within a communication network, e.g. within a private network of the air traffic control, such as a local area network, wide area network, or the like. Because ATC is part of the system critical infrastructure, such a communication network is typically protected against threats and/or cyber-attacks from outside.

In case an attacker should succeed to infiltrate the communication network, however, the software-defined radio may be at risk of being manipulated, shut down unexpectedly, or otherwise be disturbed in operation by the attacker, which may affect radio communication for ATC and/or flight safety.

### SUMMARY

The present invention solves this problem by the subject-matter of the independent claims. Further advantageous embodiments are subject-matter of the dependent claims.

According to a first aspect, there is provided a software-defined radio. The software-defined radio comprises processing circuitry. The software-defined radio further comprises a high frequency (hf) transceiver coupled to the processing circuitry. In addition, the software-defined radio comprises at least one network interface coupled to the processing circuitry and configured to establish communication via a communication network. Further, the software-defined radio comprises a software-implemented voice over IP (VoIP) module executable by the processing circuitry and configured to provide VoIP communication via the at least one network interface. Furthermore, the software-defined radio comprises a software-implemented webserver executable by the processing circuitry and configured to provide user access to the software-defined radio via the at least one network interface. In addition, the software-defined radio comprises at least one security mechanism configured to protect at least one of the at least one network interface, the VoIP module, and the webserver from threats and/or cyber-attacks.

According to a second aspect, there is provided an air traffic control (ATC) system. The ATC system comprises a communication network and at least one software-defined radio according to the first aspect. The at least one software-defined radio is operable or operated within the communication network.

The proposed software-defined radio is protected against threats and/or cyber-attacks. It is based on the finding that a software-defined radio should be individually protected even if it is operated within a protected communication network, for example, a communication network of an ATC system. The at least one security mechanism of the software-defined radio may also be understood and/or referred to as hardening of the software-defined radio, in particular hardening of its software components. The at least one security mechanism of the software-defined radio may also provide for multiple individual security measures and allows for protection or high operational security during radio operation.

As used herein, the software-defined radio may be understood as a radio and/or a radio communications apparatus or system in which one or more components are at least partly implemented by software instead of hardware. According to the first aspect, at least the VoIP module and the webserver are software-implemented. However, it is noted that the software-defined radio may also be understood that components, functionalities and/or operations that conventionally have been implemented in analog hardware are instead implemented by software, such as at least parts of signal processing and/or components such as mixers, filters, amplifiers, modulators and/or demodulators, detectors, etc. The software-defined radio may be configured to provide communication between air traffic control and a mobile communication partner, such as an aircraft. Thereby, the hf transceiver may be configured to establish a radio link and/or connection to the mobile communication partner. The VoIP module and/or the network interface may be configured to establish a respective network connection to the air traffic control. The processing circuitry may be configured to process, control, etc. the communication between the communication partners. Further, the software-defined radio may be a dedicated device with a housing, a power supply, etc., rather than a general computing device, such as a computer or the like. The software-defined radio may be an embedded system, a standalone device, or the like. In addition, the software-defined radio may have run an operating system, e.g. Linux or the like.

Further, for example, the processing circuitry may be implemented using one or more of an application specific integrated circuit (ASIC), a field programmable gate array (FPGA), a processor executing software, a microprocessor, a CPU, or other circuitry. The processing circuitry is coupled with the hf transceiver. Further, the processing circuitry is coupled with the at least one network interface. The processing circuitry may also be coupled to other components of the software-defined radio, such as a power supply, a memory, or the like. The functionalities, operations, methods, etc. of the processing circuitry described herein may be implemented by corresponding instructions, such as computer program instructions, or the like. These instructions may be stored in a memory of the software-defined radio that may be coupled to the processing circuitry. Executing the instructions by the processing circuitry may cause the processing circuitry to perform the functionalities, operations, methods, etc. described herein. The processing circuitry may be operated using an operating system, such as Linux or the like.

The hf transceiver may serve as a radio interface to a mobile communication partner, e.g. an aircraft or the like. As used herein, the hf transceiver may be broadly understood as a radio transmitter and radio receiver configured to transmit and receive radio signals, and more specifically High Frequency (HF) waves, Very High Frequency (VHF) radio waves, and/or Ultra High Frequency (UHF) radio waves. High-frequency (HF) radio waves may be classified as frequencies within the band of 3 MHz to 30 MHz. Very High Frequency (VHF) radio waves may be classified as frequencies within the band of 30 to 300 MHz. Ultra High Frequency (UHF) radio waves may be classified as frequencies within the band of 300 MHz to 3 gigahertz (GHz). It is noted that, for example, in aviation smaller and/or more specific frequency bands may be used, according to which the hf transceiver may be configured. Further, it is noted that in this field a hf transceiver is not limited to HF radio waves, but may also be configured for VHF and/or UHF radio waves. The hf transceiver may be configured to be coupled with at least one antenna.

Further, the at least one network interface may be configured to communicatively connect the software-defined radio to the communication network. The at least one network interface may be a physical network interface, such as a network interface controller, a network interface card, a network adapter, or the like. It may implement electronic circuitry configured to communicate using a specific communication standard, specific protocol, or the like. Alternatively, the at least one network interface may be a virtual network interface. For example, the communication provided by the at least one network interface may be based on the Internet Protocol (IP), wherein this is not limited herein as other standards or protocols are also conceivable. It is noted that there may also be provided at least two network interfaces. These may be configured redundantly to each other. The processing circuitry may be configured to switch among those multiple implementations. The communication network may be a local area network, a wireless local area network, a wide area network, the Internet, or the like. In at least some embodiments, the communication network may be private and/or protected against threats and/or cyber-attacks from outside the boundaries of the private communication network. The software-defined radio may be operated within the communication network.

The VoIP module is software-implemented. It is configured to provide voice and other communication services via the communication network. In the software-defined radio, the VoIP module serves as an interface to, for example, a human controller and/or operator in air traffic control, or to another communication partner. The VoIP module may be implemented by corresponding instructions, e.g. stored in the memory, that when executed by the processing circuitry are configured to cause the processing circuitry to implement the VoIP module and/or its functionalities, operations, etc.

Further, the webserver is software-implemented. It is configured to provide user access to the software-defined radio via the at least one network interface. For example, the webserver may be configured to provide user access to system settings, system configuration, application configuration, or the like, of the software-defined radio. By way of example, the webserver may also be used to apply new software to the software-defined radio. The webserver may be configured to provide a corresponding user interface, e.g. a graphical user interface and/or a graphical web browser interface, via which the user may setup, configurate, etc. the software-defined radio.

The at least one security mechanism may be understood as one or more protective measures to protect the software-defined radio from threats and/or cyber-attacks. Specifically, the at least one security mechanism may be related to the protection of the components of the software-defined radio implemented as software. As mentioned above, the at least one security mechanism may also be understood and/or referred to as hardening the software-defined radio, specifically hardening the software components of the same. Such hardening may be understood as reducing vulnerability of and thus securing the software-defined radio by reducing available ways of attacks. If the software-defined radio is operated within a protected communications network, the at least one security mechanism may be understood as an additional, radio-side and/or onboard security mechanism.

Further embodiments of the present invention are subject-matter of the dependent claims and of the following description, referring to the appended drawings. The aspects and embodiments described herein may be combined with each other, unless otherwise indicated in this disclosure.

According to an embodiment, the processing circuitry may be configured to monitor at least one of the at least one network interface, the VoIP module, and the webserver for a potential threat and/or cyber-attack. For example, the monitoring may comprise monitoring of processes, e.g. processes of the underlying operating system, processes of the VoIP module, processes of the webserver, or the like. Further, the monitoring may comprise monitoring of incoming and outgoing network communication. The monitoring may also comprise monitoring and/or usage of system resources or the like. The processing circuitry may also be referred to as the executing entity, wherein e.g. the operating system, monitoring software, or the like, may perform the monitoring.

In an embodiment, the at least one security mechanism comprises a firewall configured to monitor and/or control the network connection and/or the network traffic incoming and outgoing via the at least one network interface. The firewall may be implemented in hardware, software, or a combination thereof.

According to an embodiment, the at least one security mechanism may comprise that at least one of the at least one network interface, the VoIP module, and the webserver is implemented redundantly. In other words, one or more of those components may be implemented at least twice. Two redundant components may also be referred to as first implementation and second implementation of the at least one network interface, the VoIP module, and/or the webserver. For example, if e.g. a denial-of-service attack or other threat and/or attack occurs and/or is detected, the affected component may be replaced by using its redundant second implementation instead of its first implementation, at least temporarily.

In an embodiment, the processing circuitry may be configured to selectively switch between using a first implementation of the at least one network interface, the VoIP module, and/or the webserver and using a respective redundant, second implementation thereof in case of a threat and/or cyber-attack.

According to an embodiment, the processing circuitry may be configured to detect an overload and/or a reduced quality of service of the respective first implementation and/or second implementation caused by a threat and/or a cyber-attack and to switch between using the first implementation and the second implementation based on the detection.

In an embodiment, the at least one security mechanism may comprise executing each software process of the software-defined radio in an individual user-space of an operating system of the software-defined radio with restricted access rights. For example, the operating system may segregate memory, e.g. virtual memory, into user-space and kernel-space. The kernel-space may be strictly reserved for the operating system kernel. There may be a memory protection and/or hardware protection of the kernel-space. The user-space may be the memory area where the further software, drivers, or the like is executed. The individual user-spaces may be separated from each other. Each individual user-space may comprise memory protection and/or hardware protection.

According to an embodiment, communication among multiple individual user-spaces may be restricted. For example, a process executed in a first user-space may have no access to a process executed in a second user-space. By way of example, processes of the VoIP module may have no access to processes of the webserver, and vice versa.

In an embodiment, the at least one security mechanism may comprise that one or more system resources and/or computing resources of the software-defined radio are implemented with restricted access rights. For example, one or more of memory usage, memory access, processor or CPU usage, access to filesystem, or the like, may be restricted.

According to an embodiment, the at least one security mechanism may comprise that the user access is implemented via encrypted communication. For example, the user access, carried out via e.g. the webserver and/or the network interface, may be encrypted by using a cryptographic protocol to provide communications security over the communication network. By way of example, such cryptographic protocol may be Transport Layer Security (TLS), Secure Sockets Layer (SSL), or any other suitable protocol.

In an embodiment, the at least one security mechanism may comprise that user authentication for the user access is implemented as a requirement to access the software-defined radio. For example, a user may be required, e.g. prompted, to provide authentication by inputting a registered combination of a user name and a password, or the like. By way of example, the user authentication may be provided via the webserver. The user authentication may be required at start-up and/or boot of the software-defined radio, and/or when starting a specific application, and/or when accessing system settings, etc.

According to an embodiment, the at least one security mechanism may comprise that a filesystem of the software-defined radio is implemented at least partly as read-only. Thus, an attacker has no writing access to the filesystem, and data cannot be changed.

In an embodiment, at least one security mechanism comprises the software-defined radio, e.g. the processing circuitry, the operating system and/or another software, to verify validity of a new software to be loaded onto the software-defined radio before allowing loading the new software. For example, the software-defined radio may be configured to reject the new software if the verification of the new software fails.

According to an embodiment, the software-defined radio may comprise a tailored operating system with reduced functionality compared to a maximum available functionality. For example, tailored may be understood as not using a full Linux distribution, but a functionally scaled-down version. Thus, an attack vector of the operating system and/or the software-defined radio can be achieved.

Where appropriate, the above-mentioned configurations and embodiments can be combined with each other, unless otherwise indicated. Further possible configurations, developments and implementations of the invention also include combinations, which are not explicitly mentioned, of features of the invention which have been described previously or are described in the following with reference to the embodiments. In particular, in this case, a person skilled in the art will also add individual aspects as improvements or supplements to the basic form of the present invention.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: illustrates in a schematic block diagram an exemplary software-defined radio according to an embodiment; and
- Fig. 2: illustrates in a schematic block diagram an exemplary air traffic control system with a software-defined radio according to an embodiment, wherein the air traffic system and/or the software-defined radio is subject to a threat and/or cyber-attack.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The embodiments in the drawings are not necessarily shown in scale.

In the drawings, same, functionally equivalent and identical operating elements, features and components are provided with same reference signs in each case, unless stated otherwise.

### DESCRIPTION OF EMBODIMENTS

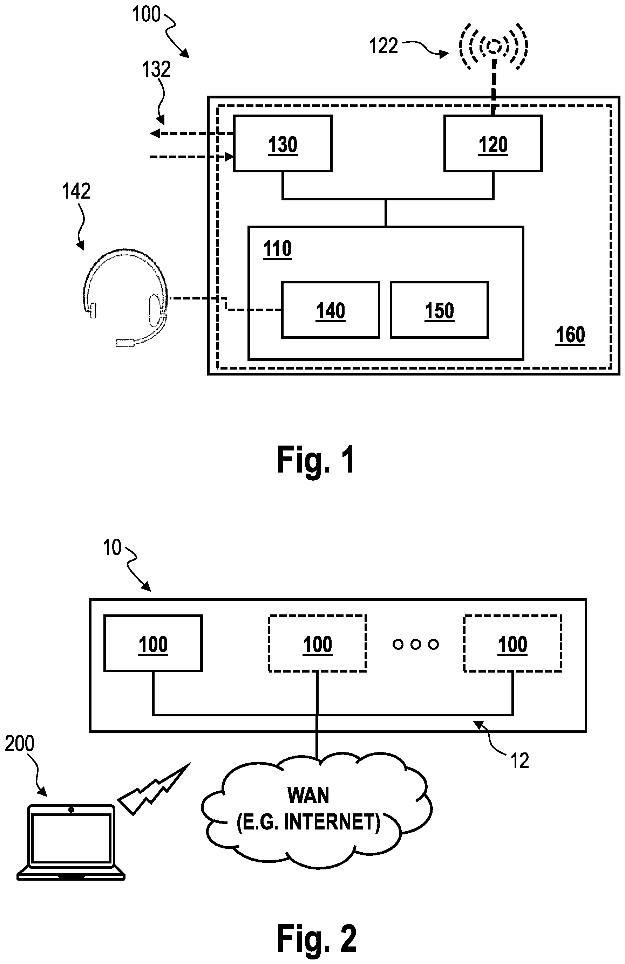

Fig. 1 shows illustrates in a schematic block diagram an exemplary software-defined radio (SDR) 100 according to an embodiment. The SDR 100 may be used in air traffic control (ATC) and/or in an ATC system (see e.g. ATC system 10 in Fig. 2). The SDR 100 may be configured to provide communication between ATC and a mobile communication partner, such as an aircraft, helicopter, or the like.

The SDR 100 comprises processing circuitry 110, a high frequency (hf) transceiver 120, and at least one network interface 130, each of which may be implemented at least substantially in hardware. Further, the SDR 100 comprises a voice over IP (VoIP) module 140 and a webserver 150, each of which may be implemented at least substantially in software and executable by the processing circuitry 110 and/or by an operating system of the SDR 100.

In addition, the SDR 100 comprises at least one security mechanism 160 that is configured to protect at least one of the at least one network interface 130, the VoIP module 140, and the webserver 150 from threats and/or cyber-attacks. In Fig. 1, the at least one security mechanism 160 is indicated by a dashed-line rectangle.

For example, the processing circuitry 110 may be implemented using one or more of an application specific integrated circuit (ASIC), a field programmable gate array (FPGA), a processor executing software, a microprocessor, a CPU, or other circuitry. The processing circuitry 110 is coupled with the hf transceiver 120. Further, the processing circuitry 110 is coupled with the at least one network interface 130. The processing circuitry may also be coupled to other components of the SDR 100, such as a power supply (not shown), a memory (not shown), or the like. The functionalities, operations, methods, etc. of the processing circuitry 110 described herein may be implemented by corresponding instructions, such as computer program instructions, or the like. These instructions may be stored in the memory of the SDR 100 that may be coupled to the processing circuitry 110. Executing the instructions by the processing circuitry 110 may cause the processing circuitry 110 to perform the functionalities, operations, methods, etc. described herein. The processing circuitry 110 and/or the SDR 100 may be operated using an operating system, such as Linux or the like.

The hf transceiver 120 may serve as a radio interface to a mobile communication partner, e.g. an aircraft, a helicopter, or the like. For example, the hf transceiver 120 may be operated in one more frequency bands assigned to ATC, such as Very High Frequency (VHF) and/or Ultra High Frequency (UHF). The hf transceiver 120 may be configured to be coupled with at least one antenna 122.

The at least one network interface 130 may be configured to communicatively the SDR 100 to a communication network (see e.g. communication network 12 in Fig. 2). The at least one network interface 130 may be a physical network interface, such as a network interface controller, a network interface card, a network adapter, or the like. It may implement electronic circuitry configured to communicate using a specific communication standard, specific protocol, or the like. Alternatively, the at least one network interface may be a virtual network interface. For example, the communication provided by the at least one network interface may be based on the Internet Protocol (IP), wherein this is not limited herein as other standards or protocols are also conceivable. In Fig. 1, network traffic incoming and outgoing network traffic is indicated by respective inbound and outbound arrows and denoted by reference sign 132.

The VoIP module 140 is software-implemented. It is configured to provide voice and other communication services via the communication network. The VoIP module 14o is executable by the processing circuitry 110 and configured to provide VoIP communication via the at least one network interface 130. In the SDR 100, the VoIP module 140 serves as an interface to, for example, a human controller and/or operator in air traffic control, or to another communication partner. The VoIP module may be implemented by corresponding instructions, e.g. stored in the memory, that when executed by the processing circuitry 110 are configured to cause the processing circuitry to implement the VoIP module 140 and/or its functionalities, operations, etc.

The webserver 150 is software-implemented. It is executable by the processing circuitry 110 and configured to provide user access to the SDR 100 via the at least one network interface 130. For example, the webserver 150 may be configured to provide user access to system settings, system configuration, application configuration, or the like, of the SDR 100. By way of example, the webserver 150 may also be used to apply new software to the SDR 100. The webserver 150 may be configured to provide a corresponding user interface, e.g. a graphical user interface and/or a graphical web browser interface, via which the user may setup, configurate, etc. the SDR 100.

The at least one security mechanism 160 may be understood as one or more protective measures to protect the SDR 100 from threats and/or cyber-attacks. Specifically, the at least one security mechanism 160 may be related to the protection of the components of the SDR 100 implemented in software. If the software-defined radio is operated within a protected communications network, the at least one security mechanism may be understood as an additional, radio-side and/or onboard security mechanism.

In at least some embodiments, the processing circuitry may be configured to monitor at least one of the at least one network interface 130, the VoIP module 140, and the webserver (150) for a potential threat and/or cyber-attack.

Further, in at least some embodiments, the at least one security mechanism 160 may comprise a firewall configured to monitor and/or control the network traffic 132 incoming and outgoing via the at least one network interface 130.

In at least some embodiment, the at least one security mechanism 160 may comprise that at least one of the at least one network interface 130, the VoIP module 140, and the webserver 150 is implemented redundantly. Although not illustrated in Fig. 1, this may mean to implement the respective blocks at least twice, in a redundant manner. For example, the redundancy may be implemented by virtualization and/or containerization of the software components.

Further, optionally, the processing circuitry 110 may be configured to selectively switch between using a respective first implementation of the at least one network interface 130, the VoIP module 140, and/or the webserver 150 and using a respective redundant, second implementation thereof in case of a threat and/or cyber-attack.

Also, optionally, the processing circuitry 110 may be configured to detect an overload and/or a reduced quality of service of the respective first implementation and/or second implementation caused by a threat and/or a cyber-attack and to switch between the first implementation and the second implementation based on the detection.

In at least some embodiments, the at least one security mechanism 160 may comprise executing each software process of the SDR 100 in an individual user-space provided by an operating system of the software-defined radio with restricted access rights.

Further, optionally, communication among multiple individual user-spaces may be restricted.

In at least some embodiments, the at least one security mechanism 160 may comprise that system resources and/or computing resources of the SDR 100 are implemented with restricted access rights.

Further, in at least some embodiments, the at least one security mechanism 160 may comprise that the user access is implemented via encrypted communication.

In at least some embodiments, the at least one security mechanism 160 may comprise that user authentication for the user access is implemented as a requirement to access the SDR 100.

Also, in at least some embodiments, the at least one security mechanism 160 may comprise that a filesystem of the SDR 100, e.g. of the operating system, is implemented at least partly as read-only.

In at least some embodiments, the at least one security mechanism 160 may comprise operating and/or instructing the SDR 100 to verify validity of a new software to be loaded onto the software-defined radio before allowing loading the new software.

Further, in at least some embodiments, the SDR 100 may comprise a tailored operating system with reduced functionality compared to a maximum available functionality. For example, the operating system may be Linux or Linux-based.

Fig. 2 illustrates in a schematic block diagram an air traffic control (ATC) system 10. The ATC system 10 comprises a communication network 12 and at least one SDR 100 that is operable or operated within the communication network 12. Further, Fig. 2 illustrates an exemplary attacker 200, i.e. a potential or actual threat and/or cyber-attack to the ATC system 10 and/or the at least one SDR 100.

For example, the communication network 12 may be a local area network, a wireless local area network, a wide area network, the Internet, or the like. In at least some embodiments, the communication network 12 may be private and/or protected against threats and/or cyber-attacks from outside the boundaries of the private communication network. The SDR 100 may be operated within the communication network 12. The attacker 200 may also be succeeded to infiltrate the communication network 12 of the ATC system 10. The communication network 12 may be connected to a wide area network, which may also be the Internet.

The at least one security mechanism 160 of the at least one SDR 100 may serve as an additional protection if the attacker 200 has succeeded to infiltrate the communication network 12. As described herein, several protection measures may be implemented in the SDR 100 to repel the attacker 200 at the SDR 100 side.

## Claims

1. A software-defined radio (100) for air traffic control, comprising:
processing circuitry (110);
a high frequency, hf, transceiver (120) coupled to the processing circuitry (110);
at least one network interface (130) coupled to the processing circuitry (110) and configured to establish communication via a communication network;
a software-implemented voice over IP, VoIP, module (140) executable by the processing circuitry (110) and configured to provide VoIP communication via the at least one network interface (130);
a software-implemented webserver (150) executable by the processing circuitry (110) and configured to provide user access to the software-defined radio (100) via the at least one network interface (130); and
at least one security mechanism (160) configured to protect at least one of the at least one network interface (130), the VoIP module (140), and the webserver (150) from threats and/or cyber-attacks.

2. The software-defined radio of claim 1, wherein the processing circuitry (110) is configured to monitor at least one of the at least one network interface (130), the VoIP module (140), and the webserver (150) for a potential threat and/or cyber-attack.

3. The software-defined radio of claim 1 or 2, wherein the at least one security mechanism (160) comprises a firewall configured to monitor and/or control the network traffic incoming and outgoing via the at least one network interface (130) .

4. The software-defined radio of any one of the preceding claims, wherein the at least one security mechanism (160) comprises that at least one of the at least one network interface (130), the VoIP module (140), and the webserver (150) is implemented redundantly.

5. The software-defined radio of claim 4, wherein the processing circuitry (110) is configured to selectively switch between using a first implementation of the at least one network interface (130), the VoIP module (140), and/or the webserver (150) and using a respective redundant, second implementation thereof in case of a threat and/or cyber-attack.

6. The software-defined radio of claim 5, wherein the processing circuitry (110) is configured to detect an overload and/or a reduced quality of service of the respective first implementation and/or second implementation caused by a threat and/or a cyber-attack and to switch between the first implementation and the second implementation based on the detection.

7. The software-defined radio of any one of the preceding claims, wherein the at least one security mechanism (160) comprises executing each software process of the software-defined radio (100) in an individual user-space of an operating system of the software-defined radio with restricted access rights.

8. The software-defined radio of claim 7, wherein communication among multiple individual user-spaces is restricted.

9. The software-defined radio of any one of the preceding claims, wherein the at least one security mechanism (160) comprises that system resources and/or computing resources of the software-defined radio (100) are implemented with restricted access rights.

10. The software-defined radio of any one of the preceding claims, wherein the at least one security mechanism (160) comprises that the user access is implemented via encrypted communication.

11. The software-defined radio of any one of the preceding claims, wherein the at least one security mechanism (160) comprises that user authentication for the user access is implemented as a requirement to access the software-defined radio (100).

12. The software-defined radio of any one of the preceding claims, wherein the at least one security mechanism (160) comprises that a filesystem of the software-defined radio (100) is implemented at least partly as read-only.

13. The software-defined radio of any one of the preceding claims, wherein the at least one security mechanism (160) comprises the software-defined radio (100) to verify validity of a new software to be loaded onto the software-defined radio before allowing loading the new software.

14. The software-defined radio of any one of the preceding claims, wherein the software-defined radio (100) comprises a tailored operating system with reduced functionality compared to a maximum available functionality.

15. An air traffic control system (10), comprising a communication network (12) and at least one software-defined radio (100) according to any one of the preceding claims operable or operated within the communication network (12).
